# EUROPÄISCHE PATENTANMELDUNG

(11) **EP 4 224 821 A2**
(43) Veröffentlichungstag der Anmeldung: **09.08.2023**
(21) Anmeldenummer: 23152044.6
(22) Anmeldetag: 17.01.2023
(51) Int. Cl.: H04L 67/12, H04L 69/18

(54) **TRANSCEIVER FÜR EIN FAHRZEUG**

(30) Priorität: 02.02.2022 DE 102022201105
(71) Anmelder: Continental Reifen Deutschland GmbH, 30165 Hannover (DE)
(72) Erfinder: von Janta Lipinski, Lukas, 30165 Hannover (DE); Dr. Lehmann, Jörg, 30165 Hannover (DE); James, Akhil, 30165 Hannover (DE); Dr. Sahlmüller, Baldo, 30165 Hannover (DE); Kochale, Axel, 30165 Hannover (DE)
(74) Vertreter: Continental Corporation

(57) **Zusammenfassung**

Die Erfindung betrifft einen Transceiver (1) für ein Fahrzeug (4) aufweisend eine Empfangseinheit (2) und eine Sendeeinheit (3) zum Empfangen von im Fahrzeug (4) erfassten und von im Fahrzeug (4) gesendeten Sensordaten und Senden der Sensordaten, wobei der Transceiver (1) dazu eingerichtet ist die Sensordaten mittels mehrerer unterschiedlicher Kommunikationstechnologien zu empfangen.

## Beschreibung

Die Erfindung betrifft einen Transceiver für ein Fahrzeug zum Empfangen von im Fahrzeug erfassten und gesendeten Sensordaten. Weiterhin betrifft die Erfindung eine Datenplattform sowie ein Fahrzeug mit derartigen Transceivern und ein Verfahren zum Betreiben eines Transceivers.

Transceiver zur fahrzeuginternen Datenübermittlung sind beispielweise bei Reifendruckkontrollsystemen bekannt. Derartige Transceiver empfangen Sensordaten von Reifendrucksensoren über eine Funkverbindung, wie beispielweise Bluetooth. Weiterhin sind Transceiver bekannt, die Sensordaten mittels WiFi oder aber mittels einer Kabelverbindung übertragen. Es sind mehrere unterschiedliche Transceiver notwendig, um Sensordaten von einer Vielzahl unterschiedlicher Sensoren zu erfassen. Bekannte Transceiver sind untereinander sowie mit einer Recheneinheit mittels Kabel miteinander verbunden.

Vor diesem Hintergrund liegt der Erfindung die Aufgabe zugrunde, einen Transceiver der eingangs genannten Art derart auszuführen, dass weniger Transceiver benötigt werden. Weiterhin soll eine möglichst einfache und kostengünstige Installation von Transceivern, insbesondere beim Nachrüsten eines Fahrzeugs mit Transceivern, möglich sein.

Diese Aufgabe wird gelöst mit einem Transceiver gemäß den Merkmalen des Patentanspruches 1 sowie einer Datenplattform und einem Fahrzeug gemäß nebengeordneten Ansprüchen und einem Verfahren zum Betreiben eines Transceivers. Die Unteransprüche betreffen besonders zweckmäßige Weiterbildungen der Erfindung.

Erfindungsgemäß ist also ein Transceiver für ein Fahrzeug aufweisend eine Empfangseinheit und eine Sendeeinheit zum Empfangen von im Fahrzeug erfassten und von im Fahrzeug gesendeten Sensordaten und Senden der Sensordaten vorgesehen, wobei der Transceiver dazu eingerichtet ist die Sensordaten mittels mehrerer unterschiedlicher Kommunikationstechnologien zu empfangen.

Das Empfangen von Sensordaten mittels unterschiedlicher Kommunikationstechnologien mit einem Transceiver ermöglicht es Sensordaten von Sensoren, die unterschiedliche Kommunikationstechnologien verwenden zu empfangen. Die Anzahl der Transceiver, insbesondere unterschiedlicher Transceiver, kann verringert werden.

Als Fahrzeug werden auch Fahrzeuggespanne, also Zugfahrzeuge mit Anhänger verstanden. Unter Sensordaten werden die von Sensoren erfassten Daten verstanden, auch wenn diese verarbeitet oder konsolidiert worden sind.

In einer vorteilhaften Ausführungsform ist der Transceiver zum Konsolidieren der Sensordaten eingerichtet, wodurch eine Verringerung der vom Transceiver zu übermittelnden Sensordaten ermöglicht wird und eine Übermittlung der Daten in verschiedenen Datenprotokollen und verschiedenen Kommunikationstechnologien ermöglicht wird.

Eine weitere vorteilhafte Weiterbildung weist einen Transceiver auf, der zum Empfangen und oder aber alternativ zum Ausgeben der Sensordaten mittels einer Funkverbindung, insbesondere mittels Radiofrequenz und oder aber alternativ Bluetooth und oder aber alternativ WiFi, eingerichtet ist. Eine Funkverbindung ist, insbesondere zum Empfangen von Sensordaten von Sensoren, die eine Relativbewegung zum Fahrzeug ausführen, vorteilhaft. Das Nachrüsten von Sensoren und Transceivern wird durch eine Funkverbindung erleichtert. Besonders kostengünstige sowie zuverlässige Funkverbindungen lassen sich mittels Radiofrequenz, Bluetooth und WiFi realisieren.

In einer weiteren vorteilhaften Ausführungsform ist der Transceiver zum Empfangen und oder aber alternativ zum Ausgeben der Sensordaten mittels einer Kabelverbindung, insbesondere an eine CAN-Bus Schnittstelle und oder aber alternativ an ein Ethernet Schnittstelle und oder aber alternativ an eine RS 232 Schnittstelle eingerichtet. Kabelverbindungen sind kostengünstig und ermöglichen eine besonders sichere sowie schnelle Datenübertragung. Eine Verbindung mit dem CAN-Bus, dem Ethernet oder an eine RS 232 Schnittstelle des Fahrzeugs ermöglicht die Nutzung der bestehenden Dateninfrastruktur des Fahrzeugs und ist daher mit geringem Aufwand zu installieren und besonders kosteneffizient.

Eine weitere bevorzugte Ausführungsform sieht vor, dass der Transceiver dazu eingerichtet ist Sensordaten unmittelbar von einem Sensor, insbesondere einem Reifendrucksensor, und oder aber alternativ von einem weiteren Transceiver und oder aber alternativ einer Telematik und oder aber alternativ unmittelbar von einer Fahrzeugelektronik und oder aber alternativ einer Benutzerschnittstelle und oder aber alternativ einer stationären Empfangseinheit zu empfangen. Das unmittelbare empfangen von Sensordaten von einem Sensor oder genauer einer Sensoreinheit, wie beispielweise einem Reifensensor, der über eine Sendeinheit verfügt, erübrigt das vorsehen einer weiteren Einheit, die die Daten an den Transceiver übermittelt. Ein Datenempfang von weiteren Transceivern ermöglicht die Realisierung einer Datenplattform durch den Austausch von Sensordaten zwischen mehreren gleichartigen Transceivern. Ein Datenempfang von der Telematik eines Fahrzeugs ermöglicht eine Datenabfrage von dem Transceiver, die außerhalb des Fahrzeugs initiiert wird. Ein Datenempfang von der Fahrzeugelektronik ermöglicht eine Datenabfrage von dem Transceiver, die auch innerhalb des Fahrzeugs initiiert werden kann, um beispielweise Sensordaten mittels einer fahrzeugeigenen Schnittstelle auszugeben. Ein Datenempfang von der Benutzerschnittstelle ermöglicht das Auslesen von Daten des Transceivers, ohne dass der Transceiver mit der Fahrzeugkommunikation verbunden werden muss. Ein Datenempfang von einer stationären Empfangseinheit, beispielweise mittels Radiofrequenz, ermöglicht das Übertragen von Daten an eine stationäre Empfangseinheit, die die Sensordaten, beispielweise mittels eines Mobilfunknetzes, an ein Backend sendet. Die Sensordaten können somit an ein Backend gesendet werden, ohne dass der Transceiver ein kostenintensives GSM-Modul aufweist.

In einer weiteren vorteilhaften Ausführungsform ist der Transceiver dazu eingerichtet die Sensordaten an den weiteren Transceiver und oder aber alternativ an die Telematik und oder aber alternativ unmittelbar an die Fahrzeugelektronik und oder aber alternativ die Benutzerschnittstelle und oder aber alternativ die stationäre Empfangseinheit zu senden. Ein Senden der Sensordaten vom Transceiver zu dem weiteren Transceiver ermöglicht den Aufbau einer Datenplattform. Das Senden der Sensordaten vom Transceiver an die Telematik ermöglicht das Auslesen der Sensordaten auch an einem fahrzeugfernen Ort, wie beispielweise einem Backend. Das Senden der Sensordaten vom Transceiver an die Fahrzeugelektronik oder die Benutzerschnittstelle ermöglicht das Auslesen der Sensordaten am Fahrzeug. Das Senden der Sensordaten vom Transceiver an die stationäre Empfangseinheit ermöglicht ein besonders einfaches und fahrzeugelektronikunabhängiges Senden der Sensordaten an das Backend. Bevorzugt entspricht die stationäre Empfangseinheit technisch einem erfindungsgemäßen Transceiver, der jedoch für einen stationären Betrieb vorgesehen ist und beispielweise eine RS 232 Schnittstelle aufweist, um über diese die Sensordaten an ein GSM-Modul zu senden.

Eine weitere vorteilhafte Weiterbildung sieht vor, dass die Empfangseinheit und die Sendeeinheit des Transceivers aus einem Radiofrequenz Transceiver und oder aber alternativ einem Bluetooth Transceiver und oder aber alternativ einem WiFi Transceiver besteht und oder aber alternativ dazu eingerichtet ist die Sensordaten kabelgebunden zu übermitteln. Radiofrequenz Transceiver sowie Bluetooth Transceiver und WiFi Transceiver sind zuverlässige sowie besonders kostengünstige Empfangs- und Sendeeinheiten für eine Funkverbindung. Kabelgebundene Empfangs- und Sendeeinheiten weisen eine besonders hohe Zuverlässigkeit auf und sind kostengünstig.

Eine weitere bevorzugte Ausführungsform sieht vor, dass der Transceiver eine Recheneinheit zum Konsolidieren der Sensordaten aufweist. Eine Recheneinheit zum Konsolidieren der Sensordaten ermöglicht ein effizientes Senden der Sensordaten und ermöglicht die Verwendung unterschiedlicher Kommunikationstechnologien.

In einer weiteren vorteilhaften Ausführungsform weist der Transceiver eine Speichereinheit zum Speichern der Sensordaten auf. Hierdurch wird das gemeinsame Konsolidieren von mit zeitlichem Abstand übermittelten Sensordaten sowie eine zeitversetzte Ausgabe der Sensordaten ermöglicht. Dies ist beim Senden der Sensordaten an eine stationäre Empfangseinheit vorteilhaft.

Eine weitere vorteilhafte Weiterbildung sieht vor, dass der Transceiver ein wasser- und stoßfestes Gehäuse aufweist, so dass der Transceiver nicht im Fahrzeuginnenraum oder einem geschützten Bereich positioniert werden muss. Eine automotive geeignete Ausführung ermöglicht beispielweise eine Montage am Radkasten des Fahrzeugs.

Erfindungsgemäß ist eine Datenplattform für ein Fahrzeug zum Empfangen von Sensordaten und Senden der Sensordaten vorgesehen, aufweisend einen erfindungsgemäßen Transceiver und einen weiteren Transceiver, wobei die Transceiver bevorzugt dazu eingerichtet sind die Sensordaten mittels Broadcast an weitere Transceiver des Fahrzeugs auszugeben. Es wird ermöglicht, dass Sensordaten aus einem Bereich des Fahrzeugs für Empfänger im gesamten Fahrzeug bereitgestellt werden. Bevorzugt sind der Transceiver und der weitere Transceiver baugleich oder identisch.

Eine weitere vorteilhafte Weiterbildung sieht den Transceiver an einer Zugmaschine und den weiteren Transceiver an einem Anhänger angeordnet vor. Hierdurch können in einfacher weise Sensordaten, die an einem Anhänger erfasst werden, an einen Empfänger in einem Zugfahrzeug gesendet werden, wobei die vorhandenen Schnittstellen nicht verwendet werden müssen. Kompatibilitätsprobleme bei wechselnden Paarungen von Zugmaschine und Anhänger entfallen.

Erfindungsgemäß ist ein Fahrzeug aufweisend einen Transceiver nach dem Hauptanspruch oder eine Datenplattform nach einem nebengeordneten Anspruch vorgesehen, wodurch die Übertragung von Sensordaten in dem Fahrzeug in besonders einfacher Form ermöglicht wird.

Erfindungsgemäß ist ein Verfahren zum Betreiben eines Transceivers nach dem Hauptanspruch oder eine Datenplattform nach einem nebengeordneten Anspruch vorgesehen, wobei Sensordaten mittels mehrerer unterschiedlicher Kommunikationstechnologien empfangen, bevorzugt konsolidiert, und gesendet werden, wodurch die Übertragung von Sensordaten in dem Fahrzeug in einem besonders einfachen Verfahren ermöglicht wird.

Die Erfindung lässt zahlreiche Ausführungsformen zu. Zur weiteren Verdeutlichung ihres Grundprinzips sind zwei davon in den Zeichnungen dargestellt und werden nachfolgend beschrieben. Diese zeigen in
Fig. 1 einen Transceiver in einem Fahrzeug mit mehreren unterschiedlichen Kommunikationstechnologien;
Fig. 2 ein Fahrzeug mit einer Datenplattform.

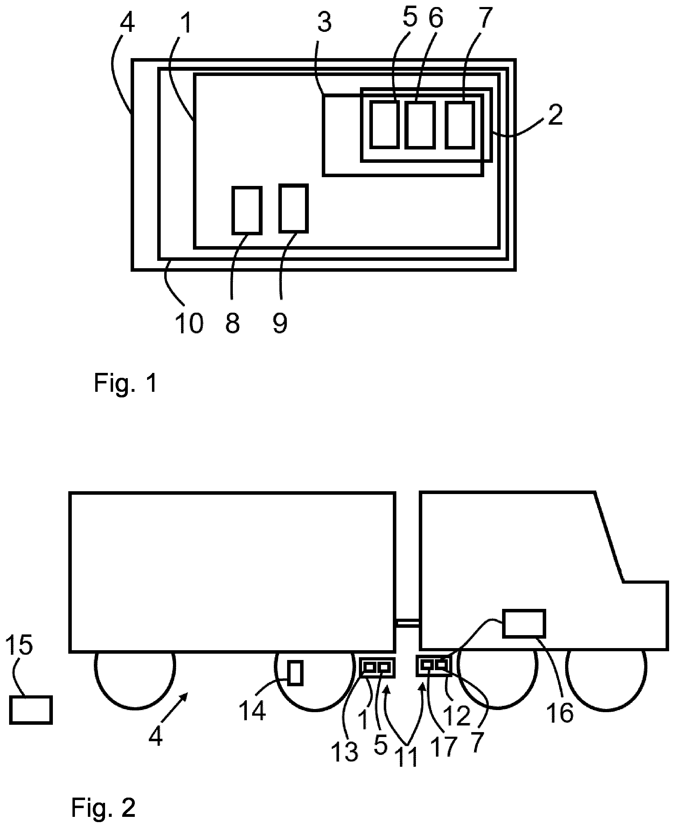

Figur 1 zeigt einen Transceiver 1 mit einer Empfangseinheit 2 und einer Sendeeinheit 3 mittels der der Transceiver 1 Sensordaten, die von Sensoren eines Fahrzeuges 4 erfasst und gesendet werden, empfängt und sendet. Der Transceiver 1 weist als Empfangseinheit 2 und Sendeeinheit 3 einen Radiofrequenz Transceiver 5, einen Bluetooth Transceiver 6 sowie eine RS 232 Schnittstelle 7 auf. Der Transceiver 1 empfängt Sensordaten unmittelbar von einem Reifendrucksensor 14.

Der Transceiver 1 weist eine Recheneinheit 8 auf, in der die Sensordaten verarbeitet oder konsolidiert werden. Folgend werden die Sensordaten auf einer Speichereinheit 9 zwischengespeichert. Mittels der Sendeeinheit 3 sendet der Transceiver 1 die konsolidierten Sensordaten an Empfänger aus. Der Transceiver 1 ist von einem Gehäuse 10 umgeben, das sowohl wasserfest als auch stoßfest ist und die Komponenten vor Umwelteinflüssen schützt.

In Figur 2 ist ein Fahrzeug 4 mit einer Datenplattform 11, bestehend aus einem Transceiver 1 und einem weiteren Transceiver 12, dargestellt. Der Transceiver 1 weist eine CAN-Bus Schnittstelle 13 zur Übermittlung der Sensordaten an den CAN-Bus des Fahrzeugs 4 auf. Weiterhin weist der Transceiver 1 einen Radiofrequenz Transceiver 5 auf, mit dem unmittelbar Sensordaten eines Reifendrucksensors 14 empfangen werden.

Die Sensordaten werden vom Transceiver 1 an die CAN-Bus Schnittstelle 13 sowie mittels des Radiofrequenz Transceiver 5 an den weiteren Transceiver 12 sowie an eine stationäre Empfangseinheit 15 gesendet. Die stationäre Empfangseinheit 15 ist mit einem GSM-Modul verbunden.

Der weitere Transceiver 12 sendet die Sensordaten mittels einer RS 232 Schnittstelle 7 an eine Telematik 16 und mit einer Ethernet Schnittstelle 17 an das Fahrzeug 4.

### Bezugszeichenliste

- 1: Transceiver
- 2: Empfangseinheit
- 3: Sendeeinheit
- 4: Fahrzeug
- 5: Radiofrequenz Transceiver

- 6: Bluetooth Transceiver
- 7: RS 232 Schnittstelle
- 8: Recheneinheit
- 9: Speichereinheit
- 10: Gehäuse

- 11: Datenplattform
- 12: weitere Transceiver
- 13: CAN-Bus Schnittstelle
- 14: Reifendrucksensor
- 15: stationäre Empfangseinheit

- 16: Telematik
- 17: Ethernet Schnittstelle

## Patentansprüche

1. Transceiver (1) für ein Fahrzeug (4) aufweisend eine Empfangseinheit (2) und eine Sendeeinheit (3) zum Empfangen von im Fahrzeug (4) erfassten und von im Fahrzeug (4) gesendeten Sensordaten und Senden der Sensordaten, **dadurch gekennzeichnet, dass** der Transceiver (1) dazu eingerichtet ist die Sensordaten mittels mehrerer unterschiedlicher Kommunikationstechnologien zu empfangen.

2. Transceiver (1) nach Anspruch 1, **dadurch gekennzeichnet, dass** der Transceiver (1) zum Konsolidieren der Sensordaten eingerichtet ist.

3. Transceiver (1) nach den Ansprüchen 1 oder 2, **dadurch gekennzeichnet, dass** der Transceiver (1) zum Empfangen und/oder Ausgeben der Sensordaten mittels einer Funkverbindung, insbesondere mittels Radiofrequenz und/oder Bluetooth und/oder WiFi, eingerichtet ist.

4. Transceiver (1) nach einem der vorangehenden Ansprüche, **dadurch gekennzeichnet, dass** der Transceiver (1) zum Empfangen und/oder Ausgeben der Sensordaten mittels einer Kabelverbindung, insbesondere mittels einer CAN-Bus Schnittstelle (13) und/oder an eine Ethernet Schnittstelle (17) und/oder an eine RS 232 Schnittstelle (7), eingerichtet ist.

5. Transceiver (1) nach einem der vorangehenden Ansprüche, **dadurch gekennzeichnet, dass** der Transceiver (1) dazu eingerichtet ist Sensordaten unmittelbar von einem Sensor, insbesondere einem Reifendrucksensor (14), und/oder von einem weiteren Transceiver (12) und/oder einer Telematik (16) und/oder unmittelbar von einer Fahrzeugelektronik und/oder einer Benutzerschnittstelle und/oder einer stationären Empfangseinheit (15) zu empfangen.

6. Transceiver (1) nach einem der vorangehenden Ansprüche, **dadurch gekennzeichnet, dass** der Transceiver (1) dazu eingerichtet ist die Sensordaten an den weiteren Transceiver (12) und/oder die Telematik (16) und/oder unmittelbar an die Fahrzeugelektronik und/oder die Benutzerschnittstelle und/oder die stationäre Empfangseinheit (15) zu senden.

7. Transceiver (1) nach einem der vorangehenden Ansprüche, **dadurch gekennzeichnet, dass** die Empfangseinheit (2) und die Sendeeinheit (3) des Transceivers (1) aus einem Radiofrequenz Transceiver (5) und/oder einem Bluetooth Transceiver (6) und/oder einem WiFi Transceiver besteht und/oder dazu eingerichtet ist die Sensordaten kabelgebunden zu übermitteln.

8. Transceiver (1) nach einem der vorangehenden Ansprüche, **dadurch gekennzeichnet, dass** der Transceiver (1) eine Recheneinheit (8) zum Konsolidieren der Sensordaten aufweist.

9. Transceiver (1) nach einem der vorangehenden Ansprüche, **dadurch gekennzeichnet, dass** der Transceiver (1) eine Speichereinheit (9) zum Speichern der Sensordaten aufweist.

10. Transceiver (1) nach einem der vorangehenden Ansprüche, **dadurch gekennzeichnet, dass** der Transceiver (1) ein wasser- und stoßfestes Gehäuse (10) aufweist.

11. Datenplattform (11) für ein Fahrzeug (4) zum Empfangen von Sensordaten und Senden der Sensordaten aufweisend den Transceiver (1) nach Anspruch 1 und einen weiteren Transceiver (12), wobei der Transceiver (1) bevorzugt dazu eingerichtet sind die Sensordaten mittels Broadcast an weitere Transceiver (12) des Fahrzeugs (4) auszugeben.

12. Datenplattform (11) nach Anspruch 11, **dadurch gekennzeichnet, dass** der Transceiver (1) an einer Zugmaschine und ein weiterer Transceiver (12) an einem Anhänger angeordnet ist.

13. Fahrzeug (4) aufweisend einen Transceiver (1) nach Anspruch 1 oder eine Datenplattform (11) nach Anspruch 11.

14. Verfahren zum Betreiben eines Transceivers (1) nach Anspruch 1 und/oder einer Datenplattform (11) nach Anspruch 11, wobei Sensordaten mittels mehrerer unterschiedlicher Kommunikationstechnologien empfangen, bevorzugt konsolidiert, und gesendet werden.
